# EUROPEAN PATENT SPECIFICATION

(11) **EP 1 463 134 B1**
(45) Date of publication and mention of the grant of the patent: **23.01.2008**
(21) Application number: 04007251.4
(22) Date of filing: 25.03.2004
(51) Int. Cl.: H01M 8/02

(54) **Process for producing an isotropic separator for fuel cell**
Verfahren zum Herstellen eines isotropen Separators für eine Brennstoffzelle
Procédé de fabrication d'un séparateur isotrope pour une pile à combustible

(30) Priority: 28.03.2003 JP 2003091810
(43) Date of publication of application: 29.09.2004
(73) Proprietor: NICHIAS CORPORATION, Tokyo (JP)
(72) Inventor: Shishitani, Hideyuki, 1-8-1 Shinmiyakoda Hamamatsu Shizuoka (JP); Inagaki, Tsuyoshi, 1-8-1 Shinmiyakoda Hamamatsu Shizuoka (JP); Omura, Atsushi, 1-8-1 Shinmiyakoda Hamamatsu Shizuoka (JP)
(74) Representative: Grünecker, Kinkeldey, Stockmair & Schwanhäusser Anwaltssozietät

(56) References cited:
- EP-A- 1 061 597
- EP-A- 1 213 272
- PATENT ABSTRACTS OF JAPAN vol. 2000, no. 05, 14 September 2000 (2000-09-14) & JP 2000 040517 A (TOKAI CARBON CO LTD), 8 February 2000 (2000-02-08)
- PATENT ABSTRACTS OF JAPAN vol. 2000, no. 09, 13 October 2000 (2000-10-13) & JP 2000 173630 A (TOKAI CARBON CO LTD), 23 June 2000 (2000-06-23)
- PATENT ABSTRACTS OF JAPAN vol. 1996, no. 11, 29 November 1996 (1996-11-29) & JP 8 180892 A (TOYOTA MOTOR CORP), 12 July 1996 (1996-07-12)

## Description

The present invention relates to a process for producing a separator for fuel cells by molding a conductive resin composition comprising a resin and a conductive filler.

Recently, interest in fuel cells, in which the chemical energy possessed by a fuel is directly converted to electrical energy, is growing. In general, a fuel cell is in the form of a stack of many unit cells each comprising a matrix containing an electrolyte, electrode plates between which the matrix is sandwiched, and fuel-cell separators disposed on the outer sides of the electrode plates.

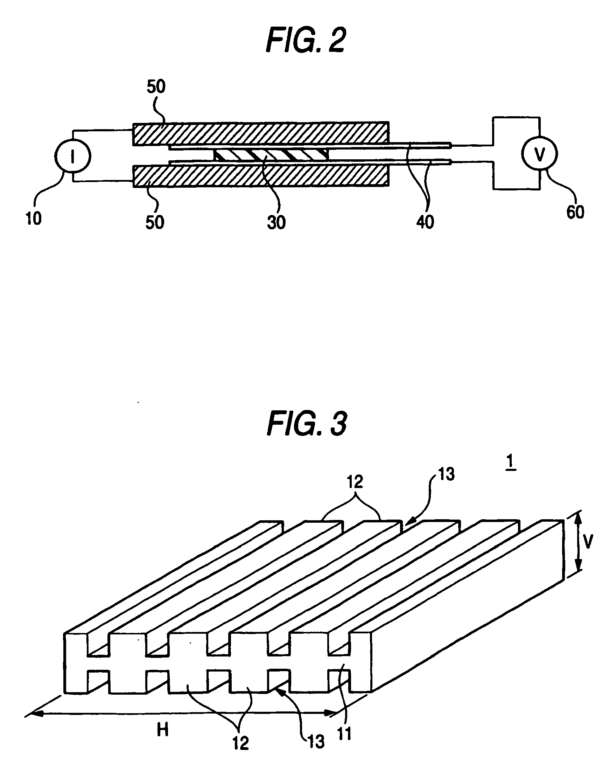

Fig. 3 is a perspective illustration showing an embodiment of a general fuel-cell separator 1. It comprises a flat plate part 11 and partition walls 12 rising on each side thereof at a predetermined interval. In fabricating a fuel cell, a large number of such fuel-cell separators 1 are stacked in the protruding direction of the partition walls 12 (upward/downward direction in the figure). As a result of this stacking, a pair of adjacent partition walls 12 form channels 13. A fuel passes on one side of each fuel-cell separator 1, while a gaseous oxidizing agent or the like passes on the other side. The fuel-cell separator 1 is hence required to have excellent gas impermeability so as to prevent the two ingredients from mixing with each other, and the partition walls 12 forming the channels 13 are required to have high dimensional accuracy.

On the other hand, the fuel-cell separator 1 is generally produced by compression-molding a conductive resin composition, prepared by kneading a conductive filler such as carbon black or graphite together with a resin such as an epoxy resin or phenolic resin, into a predetermined shape. However, there is a problem that since the conductive filler is not completely spherical, it is difficult to obtain a fuel-cell separator 1 in which the conductive filler is in an uniformly dispersed state. For example, since graphite is tabular, use thereof gives a fuel-cell separator 1 in which the graphite is apt to orient in layers in a horizontal direction in Fig. 3 (the direction indicated by the symbol H), resulting in poor conductivity in the thickness direction (the direction indicated by the symbol V).

For overcoming such a problem of conductive filler orientation, there is a technique in which the amount of a conductive filler to be incorporated is increased. However, the resultant conductive resin composition has reduced flowability and poor moldability, and this is apt to result in a decrease in dimensional accuracy. A technique that the composition is pressed from many directions during molding has also been proposed (see reference 1). This technique, however, has a disadvantage that it necessitates a special mold and a special molding apparatus and the molding step is complicated.

### [Reference 1]

JP-A-8-180892 (the term "JP-A" as used herein means an "unexamined published Japanese patent application") A graphite containing separator member for solid high polymer fuel cell and its manufactured are disclosed in JP-A-2000 040517. The manufacture of a graphite containing separator member for solid polymer fuel cell is disclosed in JP-A-2000 173630.

An object of the present invention, which has been achieved in view of such a situation, is to provide a separator for fuel cells in which a conductive filler can be made uniformly oriented without using a special mold or special molding apparatus and which has excellent conductivity.

In order to achieve the above-mentioned objects, the present invention provides a process for producing a separator for fuel cells described below:
(1) A process for producing a separator for a fuel cell comprising the steps of:
   providing a conductive resin composition comprising a resin and an electrically anisotropic conductive filler;
   press-molding the conductive resin composition under pressure without heating to obtain a preformed product in the form of a flat plate;
   cutting the preformed product parallel to its edge face by predetermined width to obtain strip-form preformed product pieces having a front surface, a back surface and a cut surface;
   aligning the strip-form preformed product pieces so as to form as a whole a plate shape having a front surface and a back surface each constituted by either the cut surfaces of the strip-form preformed product pieces or the cut surfaces and partially by the original front and back surfaces of the strip-form preformed product pieces; and
   press-forming the whole preformed product pieces into a separator shape at a temperature not lower than a curing temperature of the resin.
(2) The process for producing a separator for a fuel cell according to item 1, wherein the electrically anisotropic conductive filler is a conductive filler selected from the group consisting of: a tabular conductive materials a platy conductive material; or a fibrous conductive material.
(3) The process for producing a separator for a fuel cell according to item 2, wherein the electrically anisotropic conductive filler is expanded graphite.
(4) The process for producing a separator for a fuel cell according to item 1, wherein the conductive resin composition further comprising an electrically isotropic conductive filler.

### BRIEF DESCRIPTION OF THE DRAWINGS

Fig. 1 is process drawing showing steps of a process for fuel-cell separator production according to the present invention.
Fig. 2 is a schematic view showing the constitution of the measuring apparatus used in the Example of the present application.
Fig. 3 is a perspective illustration showing an embodiment of a separator for fuel cells.

### DETAILED DESCRIPTION OF THE INVENTION

The present invention will be explained below in detail.

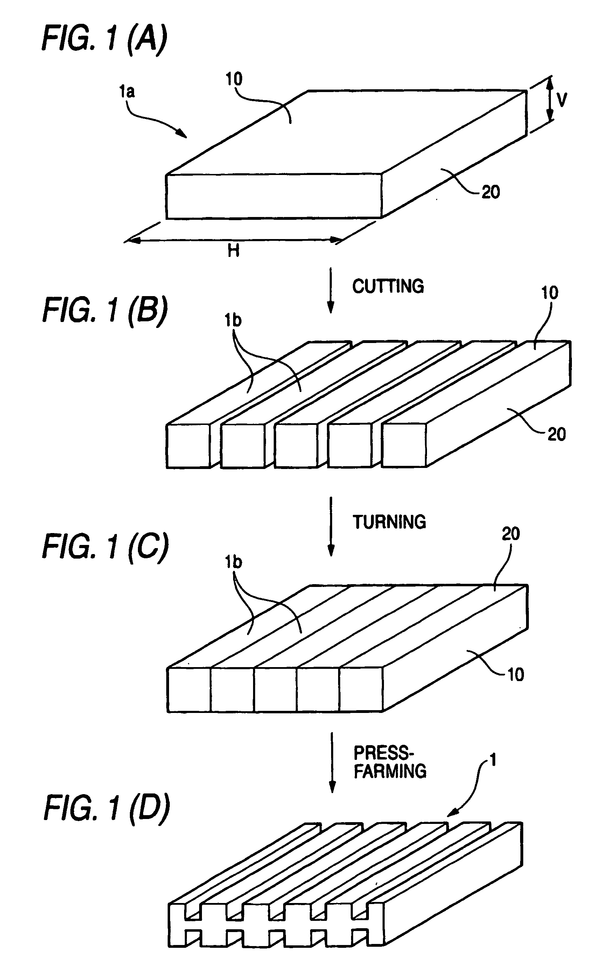

Fig. 1 is process drawing showing steps of a process for fuel-cell separator production according to the present invention. First, a resin is sufficiently kneaded together with a conductive filler to prepare a conductive resin composition in the same manner as well-known method. When dry mixing is applied, it is suitable that the temperature in kneading process is controlled at lower than the softening temperature of the resin, preferably from 0 to 80°C. Further, the density of the mixture of the resin and conductive filler is preferably 40 to 300 kg/m³. On the other hand, when melt mixing is applied, it is suitable that the temperature in kneading process is controlled at higher than the softening temperature of the resin. The conductive filler may be suitably selected from ones that have hitherto been used for separators for fuel cells. In the present invention, an electrically anisotropic conductive filler is suitably used because the resin composition undergoes the steps which will be described later. The electrically anisotropic conductive filler indicates a conductive filler having different electronic resistances depending on the plane direction or axial of the conductive filler. As the electrically anisotropic conductive filler, a conductive material such as expanded graphite or a tabular, platy, or fibrous filler, is preferable in the present invention. In general, expanded graphite is obtained by treating flake graphite with concentrated sulfuric acid, and heating the treated graphite. The particular diameter, particularly the diameter of major axis, of the expanded graphite is preferably from 50 to 500 µm. The resin also is not particularly limited, and various thermoplastic resins and thermosetting resins can be used. The amount of the electrically anisotropic conductive filler to be incorporated also is not particularly limited. However, the amount thereof is preferably at least 40% by weight based on the whole conductive resin composition in view of securing the practical conductivity of the fuel-cell separator. On the other hand, the amount of the resin to be incorporated is preferably at least 20% by weight in view of the sealing properties and shape retention of the fuel-cell separator and flowability during molding. Further, in preparing the conductive resin composition, a conductive filler and a resin are preferably mixed at compounding ratio of from 40 to 80% by weight and from 20 to 60% by weight, respectively.

An electrically isotropic conductive filler may be added to the conductive resin composition according to need. The electrically isotropic conductive filler indicates a conductive filler having an uniform electric resistance on all of the plane direction or axial of the conductive filler. As the electrically isotropic conductive resin, a carbon black such as Ketjen Black, acetylene black, or furnace black is preferable in the present invention. These carbon blacks not only come into the spaces between layers of an oriented conductive material to form conduction paths and thereby function as a conductive filler, but also function as a reinforcement which enhances the mechanical strength of the fuel-cell separator to be obtained. Regarding the amount of the carbon black to be added, the ratio of the electrically anisotropic conductive filler to the carbon black is preferably from 1:1 to 1:4, in view of the effect of forming conduction paths, the reinforcing effect, and moldability.

Unless otherwise noted, the term "conductive filler" hereinafter stands for "electrically anisotropic conductive filler".

As shown in step (A) in Fig. 1, the conductive resin composition is packed into a mold having a cavity of a flat plate shape and pressed without applying heat thereto, thereby obtain a preformed product 1a in the form of a flat plate shape. The pressing conditions preferably include a pressure of from 50 to 100 MPa. In this preformed product 1a, the conductive filler is oriented in layers parallel to the flat part 10 (in the direction indicated by the symbol H) as an product provided by a well-known method.

Subsequently, as shown in step (B) in Fig. 1, the preformed product 1a is cut at a predetermined interval parallel to an edge face 20 to obtain preformed product pieces 1b in the form of strips. The width of the preformed product pieces is preferably from 0.1 to 20 mm.

Thereafter, as shown in step (C) in Fig. 1, the preformed product pieces 1b are turned over so that the cut surfaces (the surfaces parallel to the edge face 20) of each preformed product piece 1b face upward and downward, respectively, and then horizontally arranged so that the surfaces which originally constituted the flat part 10 come into face each other. As a result of this turning, the conductive filler in each preformed product piece 1b comes into the state of being oriented in layers in the original thickness direction (the direction indicated by the symbol V in step (A) in Fig. 1).

Thereafter, as shown in step (D) in Fig. 1, the resulting assemblage is placed in a mold for fuel-cell separators while maintaining the arranged state and pressed at a curing temperature or more for the resin in the same manner as well-known process, whereby a fuel-cell separator 1 is obtained. This forming with heating orients the conductive filler, which has been oriented in the direction indicated by the symbol V, again in the direction indicated by the symbol H, and disperses the conductive filler almost uniformly in each of the thickness direction and the plane direction as a whole. Thus, a separator 1 for fuel cells that has excellent conductivity is obtained. Namely, as demonstrated by the Examples set forth below, a separator for fuel cells that has a electric resistance reduced to about a half of that of separators produced through molding by conventional processes can be obtained.

According to the present invention, the conductive filler in the separator for fuel cells can be controlled so as to orient in any desired directions by changing the arrangement of the strip-form preformed product pieces 1 in step (C) described above. For example, when the strip-form preformed product pieces 1b are arranged without turning over some of the preformed product pieces 1b, then only that part of the resultant fuel-cell separator which corresponds to these preformed product pieces 1b without turning has lower conductivity than the other parts. Thus, there is a possibility according to the process of the present invention that an entirely new method of stacking fuel cells might be developed.

### EXAMPLES

The present invention will be explained below in more detail by reference to Examples and Comparative Examples, but the present invention should not be construed as being limited to these Examples.

The conductive materials and resins shown below were mixed at compounding ratio (wt. %) shown in Table 1 to produce samples by the process set forth below.

### Conductive Materials

### Expanded graphite

(particle diameter; about 400-800 µm)

### Carbon black

(acetylene black: particle diameter; about 5-10 µm)

The particle diameter of the expanded graphite described above stands for the diameter of major axis. The particle diameter of the carbon black stands for the primary particle diameter.

### Resins

### Thermosetting epoxy resin

(Epoxy resin F6136, manufactured by SOMAR CORP., softening temperature is 80 °C)

### Thermoplastic polymethylpentene (PMP)

(Polymethylpentene RT18, manufactured by MITSUI CHEMICALS, melting temperature is 240 °C)

### Thermoplastic liquid-crystal polymer (LCP)

(Rodrun LC5000F, manufactured by UNITIKA LTD., melting temperature is 280 °C)

### Production Process

The ingredients were kneaded by dry mixing in Example 1 or by melt mixing in Examples 2 and 3 in Table 1 to obtain a kneaded mixture in each Example. For details, when dry mixing was applied, predetermined amounts of each ingredient were set in a kneading space of 10L Henschel mixer, then the ingredients were mixed in the mixer for 120 seconds at room temperature. On the other hand, when melt mixing was applied, the resins were set in the kneading space and melted by heating in Brabender (or Labo-plastomill), then an electrically anisotropic conductive filler and an electrically isotropic conductive filler were added thereto and kneaded with the resins in this order, for 15 minutes, at 260 °C when polymethylpentene is used, at 300 °C when liquid-crystal polymer is used. The kneaded mixture obtained in Example 1 was molded into a preformed product in the form of a plate shape at ordinary temperature and a pressure of 20 MPa. Subsequently, the preformed product of Example 1 was cut into strips at an interval of 5 mm. These strips were set in a mold so that the cut surfaces became upper and lower sides, and pressed at 180°C and a pressure of 100 MPa to obtain a test piece for Example 1 in the form of a 100 x 100 x 5 mm sheet-form. On the other hand, test pieces for Examples 2 and 3 were obtained from the kneaded mixtures of Examples 2 and 3 in the same manner as in Example 1, except that the pressure in preformed formation was changed to 100 MPa. Further, on the other hand, with respect to each of Comparative Examples 1 to 3, kneaded products were prepared in the same manner as Example 1 to 3, respectively. Then the kneaded products were pressed and molded into the form of a sheet at 180 °C and a pressure of 100 MPa to obtain test pieces for Comparative Examples 1 to 3, respectively.

### Measurement of Resistance

Resistances of the test pieces produced by the above process were examined by using the measuring apparatus shown in Fig. 2. The measuring apparatus shown in the figure has the following constitution. Namely, a test piece 30 is sandwiched between a pair of gold-plated electrodes 50 via a carbon paper 40 on each side. A constant current 1 A is caused to flow from a power source 10, and the voltage between the carbon papers 40 is measured with a voltmeter 60. Then resistances is calculated from the constant current and the measured voltages by using the equation V=IR. The calculated resistance was multiplied by the surface of the sample to obtain the total resistance. Accordingly, it is noted that each total resistance includes the contact resistance between each carbon paper 40 and the test piece 30 and the volume resistance of the test piece 30. The results of the measurement are given in Table 1.

**Table 1**

| | Example 1 | Comparative Example 1 | Example 2 | Comparative Example 2 | Example 3 | Comparative Example 3 |
|---|---|---|---|---|---|---|
| Epoxy resin | 30 | 30 | - | - | - | - |
| PMP | - | - | 40 | 40 | - | - |
| LCP | - | - | - | - | 50 | 50 |
| Expanded graphite | 60 | 60 | 50 | 50 | 40 | 40 |
| Carbon black | 10 | 10 | 10 | 10 | 10 | 10 |
| Process of Production | A → B | B | A → B | B | A → B | B |
| Resistance (mΩ·cm²) | 20 | 40 | 30 | 50 | 50 | 80 |

| | | | | | | |
|---|---|---|---|---|---|---|
| Note 1) The amount of each ingredient is given in % by weight. Note 2) In "Process of production", "A" indicates orientation regulation and "B" indicates compression molding. | | | | | | |

The test pieces of Comparative Examples 1 to 3 shown in Table 1 are those provided by the conventional process. The results show that the test pieces of Examples 1 to 3, which were molded according to the present invention, have a resistance reduced to about a half of the resistance for the test pieces of the Comparative Examples.

As described above, according to the present invention, the orientation of a conductive filler can be made uniform and a separator for fuel cells which has excellent conductivity is obtained without using a complicated mold.

## Claims

1. A process for producing a separator for a fuel cell comprising the steps of:
providing a conductive resin composition comprising a resin and an electrically anisotropic conductive filler;
press-molding the conductive resin composition under pressure without heating to obtain a preformed product in the form of a flat plate;
cutting the preformed product parallel to its edge face by predetermined width to obtain strip-form preformed product pieces having a front surface, a back surface and a cut surface;
aligning the strip-form preformed product pieces so as to form as a whole a plate shape having a front surface and a back surface each constituted by either the cut surfaces of the strip-form preformed product pieces or the cut surfaces and partially by the original front and back surfaces of the strip-fomn preformed product pieces; and
press-forming the whole preformed product pieces into a separator shape at a temperature not lower than a curing temperature of the resin.

2. The process for producing a separator for a fuel cell according to claim 1,
wherein the electrically anisotropic conductive filler is a conductive filler selected from the group consisting of: a tabular conductive material; a platy conductive material; or a fibrous conductive material.

3. The process for producing a separator for a fuel cell according to claim 2,
wherein the electrically anisotropic conductive filler is expanded graphite.

4. The process for producing a separator for a fuel cell according to claim 1,
wherein the conductive resin composition further comprising an electrically isotropic conductive filler.

## Patentansprüche

1. Verfahren zum Herstellen eines Separators für eine Brennstoffzelle, umfassend die Schritte:
Bereitstellen einer leitfähigen Harzzusammensetzung, umfassend ein Harz und einen elektrisch anisotropen leitfähigen Füllstoff;
Pressformen der leitfähigen Harzzusammensetzung unter Druck ohne erwärmen, um ein vorgeformtes Produkt in der Form einer flachen Platte zu erhalten;
Schneiden des vorgeformten Produkts parallel zu dessen Kantenfläche in vorbestimmter Breite, um streifenförmige vorgeformte Produktstücke mit einer vorderen Fläche, einer hinteren Fläche und einer Schnittfläche zu erhalten;
Ausrichten der streifenförmigen vorgeformten Produktstücke, um als ein ganzes eine Plattenform mit einer vorderen Fläche und einer hinteren Fläche zu bilden, von denen jedes entweder durch die Schnittflächen der streifenförmigen vorgeformten Produktstücke oder durch die Schnittflächen und teilweise durch die ursprünglichen vorderen und hinteren Flächen der streifenförmigen vorgeformten Produktstücke jeweils konstituiert ist; und
Pressformen der ganzen vorgeformten Produktstücke in eine Separatorform bei einer Temperatur, die nicht niedriger als die Härtungstemperatur des Harzes ist.

2. Das Verfahren zum Herstellen eines Separators für eine Brennstoffzelle gemäß Anspruch 1,
worin der elektrisch anisotrope leitfähige Füllstoff ein elektrischer Füllstoff ist, der ausgewählt ist aus der Gruppe, bestehend aus: einem tafelförmigen leitfähigen Material; einem flachen leitfähigen Material oder einem faserförmigen leitfähigen Material.

3. Das Verfahren zum Herstellen eines Separators für eine Brennstoffzelle gemäß Anspruch 2,
worin der elektrisch anisotrope leitfähige Füllstoff expandierter Graphit ist.

4. Das Verfahren zum Herstellen eines Separators für eine Brennstoffzelle gemäß Anspruch 1,
worin die leitfähige Harzzusammensetzung weiter einen elektrisch isotropen leitfähigen Füllstoff umfasst.

## Revendications

1. Procédé de production d'un séparateur destiné à une pile à combustible comprenant les étapes consistant à :
prévoir une composition de résine conductrice comprenant une résine et une charge conductrice électriquement anisotrope ;
mouler par compression la composition de résine conductrice sous pression sans chauffage, afin d'obtenir un produit préformé sous la forme d'une plaque plate ;
découper le produit préformé parallèlement à sa face de bord, selon une largeur prédéterminée, afin d'obtenir des morceaux de produit préformé en forme de bandes ayant une surface avant, une surface arrière et une surface de découpe ;
aligner les morceaux de produit préformé en forme de bandes de façon à former dans l'ensemble une forme de plaque ayant une surface avant et une surface arrière chacune constituées par les surfaces de découpe des morceaux de produit préformé en forme de bandes ou par les surfaces de découpe et partiellement par les surfaces avant et arrières d'origine des morceaux de produit préformé en forme de bandes ; et
former sous pression les morceaux de produit préformé entiers selon une forme de séparateur à une température non inférieure à une température de durcissement de la résine.

2. Procédé de production d'un séparateur destiné à une pile à combustible selon la revendication 1,
dans lequel la charge conductrice électriquement anisotrope est une charge conductrice choisie parmi le groupe consistant en : un matériau conducteur tabulaire ; un matériau conducteur lamellaire ; ou un matériau conducteur fibreux.

3. Procédé de production d'un séparateur destiné à une pile à combustible selon la revendication 2,
dans lequel la charge conductrice électriquement anisotrope est du graphite expansé.

4. Procédé de production d'un séparateur destiné à une pile à combustible selon la revendication 1,
dans lequel la composition de résine conductrice comprend en outre une charge conductrice électriquement isotrope.
